# FASCICULE DE BREVET EUROPEEN

(11) **EP 1 046 105 B1**
(45) Date de publication et mention de la délivrance du brevet: **22.02.2017**
(21) Numéro de dépôt: 99954060.2
(22) Date de dépôt: 04.11.1999
(51) Int. Cl.: G06F 9/45

(54) **PROCEDE DE COMPACTAGE D'UN PROGRAMME DE TYPE CODE OBJET INTERMEDIAIRE EXECUTABLE DANS UN SYSTEME EMBARQUE MUNI DE RESSOURCES DE TRAITEMENT DE DONNEES, SYSTEME COMPACTEUR ET SYSTEME EMBARQUE MULTI-APPLICATIONS CORRESPONDANTS**
VERFAHREN ZUM KOMPAKTIEREN EINES IN EINEM INTEGRIERTEN SYSTEM MIT DATENVERARBEITUNGSMITTEL AUSFÜHRBAREN ZWISCHENOBJEKTKODE-PROGRAMMS, KOMPAKTIERSYSTEM UND INTEGRIERTES MULTIANWENDUNGS-SYSTEM DAFÜR
DATA COMPACTION METHOD FOR AN INTERMEDIATE OBJECT CODE PROGRAMME EXECUTABLE IN AN ONBOARD SYSTEM PROVIDED WITH DATA PROCESSING RESOURCES AND CORRESPONDING ONBOARD SYSTEM WITH MULTIPLE APPLICATIONS

(30) Priorité: 06.11.1998 FR 9814012
(43) Date de publication de la demande: 25.10.2000
(73) Titulaire: CP8 TECHNOLOGIES, 78431 Louveciennes (FR)
(72) Inventeur: SCHULTZ, Ulrik, Pagh, F-35000 Rennes (FR); MULLER, Gilles, F-35690 Acigne (FR); CONSEL, Charles, F-35240 Retiers (FR); CLAUSEN, Lars, Urbana, IL 61801 (US); GOIRE, Christian, F-78340 Les Clayes-sous-Bois (FR)
(74) Mandataire: Delaval, Guillaume Laurent
(86) Numéro de dépôt international: PCT/FR1999/002696
(87) Numéro de publication internationale: WO 2000/028416

(56) Documents cités:
- FR-A- 2 757 970
- VAHID F: "Procedure exlining: a transformation for improved system and behavioral synthesis" PROCEEDINGS OF THE INTERNATIONAL SYMPOSIUM ON SYSTEM SYNTHESIS, 13 septembre 1995 (1995-09-13), pages 508-513 89, XP002098348
- DEBAERE E H: "A language coprocessor for the interpretation of threaded code" MICROPROCESSING & MICROPROGRAMMING, vol. 21, no. 1-5, août 1988 (1988-08), pages 593-602, XP002114520 Amsterdam, The Netherlands
- ACCOMAZZO E ET AL: "INTEGRATING INTERMEDIATE CODE OPTIMIZATION WITH RETARGETABLE CODE GENERATION" MICROPROCESSING AND MICROPROGRAMMING, vol. 30, no. 1 / 05, 1 août 1990 (1990-08-01), pages 475-481, XP000141684 ISSN: 0165-6074
- BIGET P ET AL: "How smart cards can benefit from object-oriented technologies" FUTURE GENERATIONS COMPUTER SYSTEMS, vol. 13, no. 1, 1 juillet 1997 (1997-07-01), page 75-90 XP004081711 ISSN: 0167-739X

## Description

La présente invention est relative à un procédé de compactage d'un programme de type code objet intermédiaire, exécutable dans un système embarqué muni de ressources de traitement de données et au système compacteur correspondant.

Les systèmes embarqués munis de ressources de traitement de données actuels permettent de remplir des fonctions de plus en plus complexes et de plus en plus nombreuses, en raison de l'optimisation croissante de l'adéquation entre le matériel, constitutif de ces objets portatifs, et des logiciels, ou plus particulièrement des programmes ou applications implantés dans ces derniers, afin de leur conférer une ou plusieurs fonctionnalités spécifiques. La notion de système embarqué recouvre tout système informatique portable, tel qu'objet portatif, carte à microprocesseur ou analogue, distinct d'un micro-ordinateur classique.

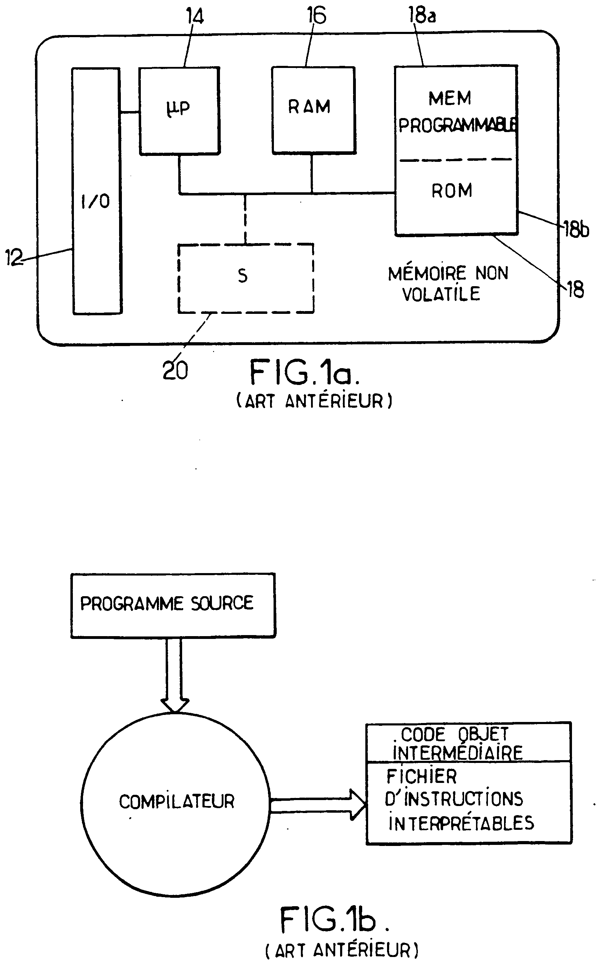

C'est en particulier le cas des cartes à microprocesseur, encore appelées cartes à puce, telles que représentées en figure la, pour lesquelles on utilise un compilateur pour engendrer des instructions et un interpréteur permettant d'assurer l'exécution de ces instructions par le microprocesseur, ainsi que représenté en figure 1b. De manière classique, ainsi que représenté sur la figure 1a, une carte à microprocesseur 10 comprend un système d'entrée/sortie 12, relié au microprocesseur 14, une mémoire RAM 16, une mémoire non volatile 13, constituée par une mémoire morte ROM 18b et une mémoire programmable 18a. L'ensemble de ces éléments est relié au microprocesseur 14 par une liaison par BUS. Un module 20 de chiffrement/déchiffrement de données peut, le cas échéant, être prévu.

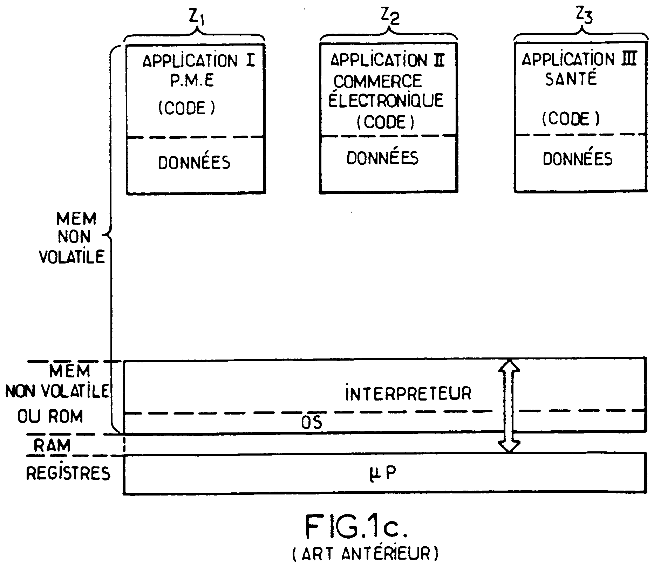

L'implantation de l'ensemble des éléments logiciels d'applications, tels que porte-monnaie électronique, commerce électronique ou santé, dans la mémoire programmable non volatile, de l'interpréteur en mémoire programmable non volatile ou en mémoire morte et du système d'exploitation, en mémoire morte ROM, est représentée en figure 1c.

Le code objet intermédiaire est engendré par le compilateur à partir d'un programme source, le plus souvent écrit en langage de haut niveau, à partir des caractères ASCII. Le programme source et le code objet intermédiaire correspondant peuvent être exécutés par tous les microprocesseurs usuels, car l'interpréteur assure l'adaptation logicielle des instructions standard du code objet intermédiaire en instructions directement exécutables par le microprocesseur.

A titre d'exemple non limitatif, les fabricants de cartes à microprocesseur ont récemment développé des interpréteurs implantés dans la mémoire morte ROM. Ce type d'interpréteur lit de façon séquentielle un programme ou code objet intermédiaire, support d'une application par exemple, chargé par exemple dans la mémoire programmable de la carte à microprocesseur. Chaque instruction standard de ce code objet intermédiaire est interprétée par l'interpréteur, puis exécutée par le microprocesseur. En règle générale, les instructions standard du code objet intermédiaire permettent de traiter des fonctions évoluées telles que le traitement arithmétique et la manipulation d'objets. La notion d'objet concerne les objets informatiques tels que des listes, tableaux de données ou analogues.

Toutefois, en raison notamment du caractère portatif de ces cartes à microprocesseur, l'encombrement et la taille de ces dernières sont limités. Il en est de même de la taille de la mémoire programmable de ces derniers, laquelle est, par construction, limitée à quelques kilo-octets. Une telle limitation structurelle ne permet pas la mise en oeuvre de gros programmes d'application.

En outre, la tendance actuelle de la mise en oeuvre de systèmes embarqués multi-applications trouve une limitation rédhibitoire à la multiplication du nombre d'applications installées sur un même système embarqué ou carte à microprocesseur, à un nombre excédant rarement trois applications.

Le document d'Accomazzo et al intitulé "Integrating Intermediate Code Optimization with retargetable Code Generation", apparu dans Microprocessing and Microprogramming, vol. 30, no. 1/5, août 1990, pages 475-481, ISSN: 0165-6074 prévoit le remplacement d'une série d'instructions dans un code de type intermédiaire, par une opérations, définie par utilisateur

### Résumé de l'invention

Un premier aspect de l'invention est une méthode telle que définie dans la revendication indépendante 1. Un second aspect est un système comme défini dans la revendication 7. Un troisième aspect est une unité telle que définie dans la revendication 10. D'autres modes de réalisation de l'invention sont spécifiés dans les revendications dépendantes attenantes.

La présente invention a pour objet de remédier à l'inconvénient précité par la mise en oeuvre d'un procédé de compactage d'un programme de type code objet intermédiaire, utilisable dans un système embarqué de type carte à microprocesseur, afin de libérer de l'espace mémoire dans la mémoire programmable de ce système embarqué et permettre ainsi l'implantation d'au moins une application supplémentaire, après compactage de cette dernière.

Un autre objet de la présente invention est en outre la mise en oeuvre d'un système de compactage de programmes de type code objet intermédiaire permettant l'implantation d'un programme de type code objet intermédiaire compacté dans un système embarqué multi-applications muni de ressources de traitement de données permettant l'exécution de programmes de type code objet intermédiaires compactés en l'absence de modification notable de la durée d'exécution, et en transparence totale vis-à-vis du processus inhérent à chaque application non compactée.

Le procédé de compactage, objet de l'invention, d'un programme de type code objet intermédiaire consistant en une suite d'instructions standard, ce système embarqué étant doté d'une mémoire et d'un interpréteur de langage du programme de type code objet intermédiaire en instructions d'un code objet directement exécutables par un microprocesseur et ce programme étant normalement mémorisé dans la mémoire de ce système embarqué, est remarquable en ce que l'on recherche dans le programme de type code objet intermédiaire des séquences identiques d'instructions standard successives et l'on soumet les séquences identiques d'instructions standard successives à un test de comparaison de supériorité d'une fonction d'au moins le nombre d'occurrences de ces séquences dans le programme de type code objet intermédiaire à une valeur de référence. Sur réponse positive au test précité, pour chaque séquence identique d'instructions standard successives satisfaisant à l'étape de test, on engendre une instruction spécifique par définition d'un code opératoire spécifique et association à ce code opératoire spécifique de la séquence d'instructions standard successives ayant satisfait à ce test. On remplace en outre, dans le programme de type code objet intermédiaire mémorisé, chaque occurrence de chaque séquence d'instructions standard successives par le code opératoire spécifique qui lui est associé, pour obtenir un programme de type code objet intermédiaire compacté, succession d'instructions standard et de codes opératoires spécifiques. On mémorise dans la mémoire une table de décompactage permettant la mise en correspondance biunivoque entre chaque code opératoire spécifique introduit et la séquence d'instructions standard successives associée à ce dernier. Ce processus permet d'optimiser l'espace mémoire occupé par le programme de type code objet intermédiaire compacté par mémorisation dans la mémoire programmable d'une seule occurrence des séquences identiques d'instructions standard successives.

Le procédé, le système de compactage d'un programme de type code objet intermédiaire et le système embarqué multi-applications correspondant, objets de la présente invention, trouvent application dans le domaine technique des systèmes embarqués, plus particulièrement dans la mise en oeuvre et la gestion de cartes à microprocesseur.

Ils seront mieux compris à la lecture de la description et à l'observation des dessins ci-après dans lesquels, outre les figures 1a à 1c relatives à l'art antérieur,
- la figure 2a représente un organigramme général illustratif d'un procédé de compactage d'un programme de type code objet intermédiaire, selon la présente invention ;
- la figure 2b représente un schéma synoptique illustratif de la mise en oeuvre des différents opérateurs nécessaires à l'obtention d'un programme de type code objet intermédiaire compacté et de paramètres permettant le décompactage ou l'exécution de ce programme ;
- la figure 2c représente, à titre purement illustratif, l'implantation en mémoire programmable, non volatile, d'une carte à microprocesseur de ce programme de type code objet intermédiaire compacté et des paramètres d'exécution ou décompactage de ce dernier ;
- la figure 3a représente, dans un mode de réalisation particulier non limitatif, un schéma illustratif de la structure d'un premier fichier constitutif de ces paramètres d'exécution ou décompactage de ce programme de type code objet intermédiaire compacté ;
- la figure 3b représente, dans un mode de réalisation particulier non limitatif, un schéma illustratif de la structure d'un deuxième fichier constitutif de ces paramètres d'exécution ou décompactage de ce programme de type code objet intermédiaire compacté ;
- la figure 4 représente, à titre illustratif, l'implantation en mémoire programmable non volatile d'un programme de type code objet intermédiaire compacté, selon la présente invention, dans une carte à microprocesseur ou système embarqué multi-applications ;
- la figure 5 représente, à titre illustratif, un processus de mise en oeuvre spécifique du procédé de compactage d'un programme de type code objet intermédiaire dans lequel une actualisation des codes spécifiques relatifs à des applications ou programmes de type code objet intermédiaires distincts est réalisé ;
- les figures 6a et 6b représentent, sous forme d'éléments fonctionnels, un système de compactage d'un programme de type code objet intermédiaire conforme à l'objet de la présente invention.

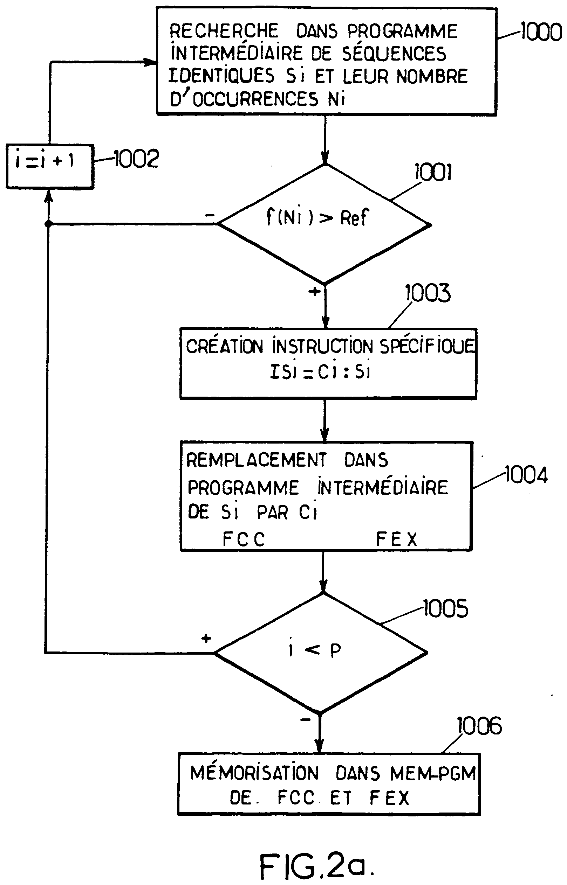

Le procédé de compactage d'un programme de type code objet intermédiaire, conforme à l'objet de la présente invention, sera maintenant décrit en liaison avec la figure 2a. La désignation programme type code objet intermédiaire recouvre tout programme intermédiaire dans la présente demande de brevet.

Ce procédé sera décrit de manière non limitative dans le cas de sa mise en oeuvre dans un système embarqué constitué par exemple par une carte à microprocesseur telle que représentée en figure la, ce programme de type code objet intermédiaire étant obtenu de manière classique, ainsi que représenté en figure 1b, et l'implantation en mémoire programmable d'une pluralité d'applications de l'interpréteur et du système d'exploitation OS en mémoire ROM étant représentée en figure 1c, de manière non limitative.

Le programme de type code objet intermédiaire consiste en une suite d'instructions standard exécutables par le microprocesseur par l'intermédiaire de l'interpréteur.

Le procédé de compactage d'un tel programme consiste, préalablement à l'implantation de ce dernier en mémoire programmable 18a, à effectuer, ainsi que représenté en figure 2a, en une étape 1000, une recherche dans le programme de type code objet intermédiaire des séquences identiques d'instructions standard successives, ces séquences identiques étant notées Si. Par séquences identiques, on indique une suite d'un nombre n d'octets déterminé susceptible d'apparaître de manière répétitive dans le programme de type code objet intermédiaire précité. Ainsi, le rang i des séquences identiques indique, pour des valeurs de i différentes, des séquences distinctes. En outre, l'étape 1000 de recherche précitée consiste à déterminer le nombre d'occurrences Ni de chaque séquence identique Sᵢ précitée. A l'issue de l'étape 1000 de recherche, on dispose d'une pluralité de séquences identiques Sᵢ, chaque séquence Si étant distincte, et d'un nombre Ni représentant le nombre d'occurrences dans le programme de type code objet intermédiaire de chacune des séquences Si.

Suite à l'étape 1000 précitée, le procédé de compactage, objet de la présente invention, consiste à soumettre, en une étape 1001, les séquences identiques d'instructions standard successives Sᵢ à un test de comparaison d'une fonction f(Nᵢ) d'au moins le nombre d'occurrences Ni associé à une séquence identique Sᵢ. Sur la figure 2a, le test de comparaison est noté :
f(Nᵢ) > Ref.

Lorsque la réponse au test 1001 est négative, la fonction d'au moins le nombre d'occurrences Ni n'étant pas supérieure à la valeur de référence, le test 1001 est appliqué à la séquence identique suivante, de rang i+1, par incrémentation de l'indice i à l'étape 1002.

Les étapes 1000, 1001 et 1002 représentées en figure 2a permettent ainsi de rechercher dans le programme de type code objet intermédiaire l'ensemble des séquences ou séries d'octets identiques ou, à tout le moins, un nombre significatif donné de ces séquences identiques, ainsi qu'il sera décrit ultérieurement dans la description.

Sur réponse positive au test 1001 précité, le procédé de compactage, objet de la présente invention, consiste ensuite à engendrer une instruction spécifique, notée ISᵢ, par définition d'un code opératoire spécifique, noté Cᵢ, et association à ce code opératoire spécifique de la séquence d'instructions standard successives ayant satisfait au test, la séquence d'instructions standard successives Sᵢ. Sur la figure 2a, l'étape de création d'instructions spécifiques est notée :
ISᵢ = Cᵢ:Sᵢ.

On indique que l'étape de définition d'un code opératoire spécifique et d'association à ce dernier de la séquence d'instructions standard successives Si peut consister en l'attribution d'une valeur de code et l'association sous forme d'une liste par exemple de cette valeur de code et de la séquence d'instructions Sᵢ précitée.

Suite à l'étape 1003, le procédé de compactage consiste ensuite, à l'étape 1004, à remplacer dans le programme de type code objet intermédiaire mémorisé chaque occurrence de la séquence d'instructions successives standard Si par le code opératoire spécifique Ci qui lui est associé pour obtenir un programme de type code objet compacté, noté FCC, succession d'instructions standard et de codes opératoires spécifiques Cᵢ.

Le processus de remplacement peut alors être réitéré pour chaque séquence ou série d'instructions standard identiques Si tant que l'indice i est inférieur à un nombre P de séquences identiques, un test 1005 de comparaison de l'indice i à la valeur P permettant, sur réponse positive à ce test, le retour à l'étape d'incrémentation 1002 de l'indice i précédemment décrit.

On comprend en particulier que, suite à l'itération du processus de remplacement ainsi formé, on obtient un programme de type code objet compacté, noté FCC, auquel est associé un fichier d'exécution de ce dernier, fichier noté FEX, ce fichier d'exécution consistant au moins en une mise en correspondance biunivoque entre chaque code spécifique Ci et la séquence d'instructions standard successives Si précitée.

Suite à l'obtention des deux fichiers précités, programme de type code objet intermédiaire compacté et fichier d'exécution, sur réponse négative au test 1005 par exemple, il est possible de procéder à une mémorisation, dans la mémoire programmable 18a par exemple, du programme de type code objet intermédiaire compacté obtenu FCC précité, et bien entendu du fichier d'exécution FEX précédemment mentionné. La mémorisation précitée peut de manière non limitative être effectuée dans la mémoire non volatile 18, mémoire programmable 18a ou même mémoire morte 18b.

En ce qui concerne le test de comparaison 1001 précité, on indique bien entendu que la fonction d'au moins le nombre d'occurrences de chaque séquence identique Si peut être définie de façon à obtenir une optimisation du gain de compactage ainsi réalisé. Dans un mode de réalisation non limitatif, on indique que cette fonction peut être établie de façon à réaliser une comparaison de la taille de chaque séquence identique d'instructions standard successives en nombre d'octets à une valeur de seuil, exprimée par exemple en nombre d'instructions standard.

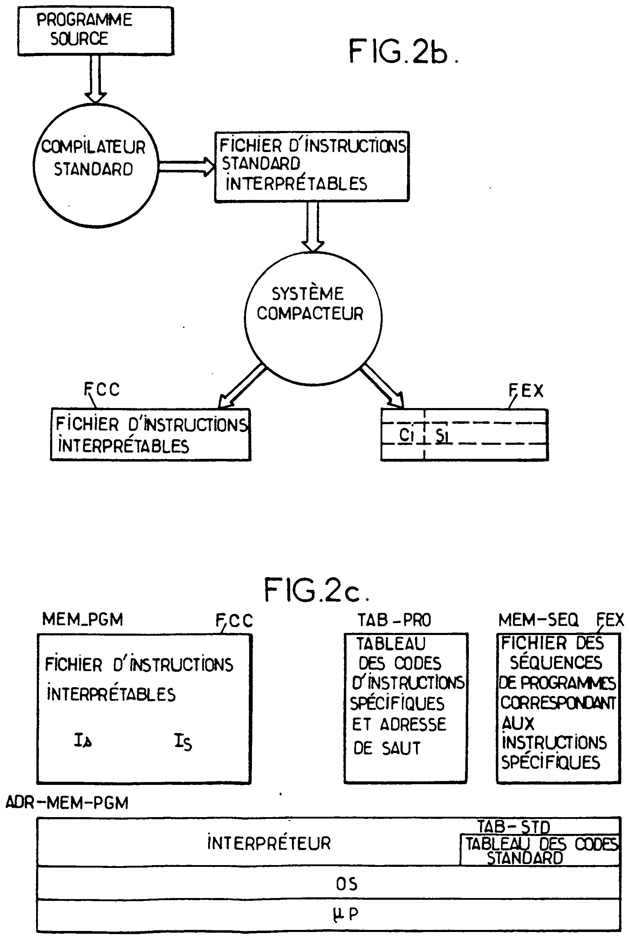

La figure 2b décrit, à titre d'exemple illustratif, un mode opératoire permettant d'engendrer un programme de type code objet intermédiaire compacté conformément à la mise en oeuvre du procédé, objet de la présente invention.

Dans un premier temps, le créateur du programme de type code objet intermédiaire réalise un fichier de type texte contenant le programme source. Ce programme établi par ce dernier à partir d'un langage évolué est, de manière générale, écrit en code ASCII de manière à être lu facilement et à pouvoir contenir des commentaires qui facilitent, d'une part, la compréhension, et d'autre part, la mise au point de ce dernier. Le programme source ainsi obtenu est introduit dans un compilateur de type classique, dit compilateur standard, dont le rôle consiste à transformer chaque ligne de programme en instructions exécutables ou, à tout le moins, en instructions interprétables pour obtenir un programme de type code objet intermédiaire consistant en une suite d'instructions standard interprétables par l'interpréteur.

Le fichier de type code objet intermédiaire ainsi obtenu suite au processus de compilation est introduit dans un système compacteur permettant la mise en oeuvre du procédé de compactage précédemment décrit en liaison avec la figure 1. Ce système compacteur sera décrit ultérieurement dans la description.

Le processus de compactage mis en oeuvre, ainsi que décrit précédemment, permet alors l'obtention d'un fichier d'instructions interprétables FCC, c'est-à-dire du fichier constitutif du programme de type code objet intermédiaire compacté, et du fichier d'exécution FEX précédemment mentionné dans la description.

Le mode opératoire du système de compactage sera décrit ci-après dans un exemple spécifique de mise en oeuvre.

En premier lieu, le système compacteur analyse toutes les instructions standard Iₛ et dresse une liste de toutes les séries d'instructions standard existant dans le fichier constitutif de ce dernier.

Si le fichier précité contient 1000 octets par exemple, le système compacteur lance une procédure de recherche de toutes les séries d'au moins deux octets jusqu'à un nombre Q par exemple. La recherche précitée peut être effectuée pour des séries de deux octets, puis de trois octets, et ainsi de suite jusqu'à Q octets. Dans un mode de réalisation préférentiel, le nombre Q avait la valeur 500.

Ainsi, pour chaque séquence d'instructions Sᵢ, formée par une série d'instructions standard Iₛ, le système compacteur détermine si cette séquence Sₗ est déjà dans la liste. Dans un tel cas, le système compacteur rajoute une unité au nombre d'occurrences Nₗ de la séquence Sₗ précitée.

A la fin du processus de recherche précité, le système compacteur a ainsi engendré une liste complexe contenant l'ensemble des séquences d'instructions Sᵢ examinées, à chaque séquence étant associé un nombre d'occurrences Ni dans le programme de type code objet intermédiaire considéré.

Un tableau illustratif est donné ci-après pour un programme de type code objet intermédiaire constitué par la série d'instructions ci-après :
1-7-3-5-7-3-7-3-5-7.

Alors que pour l'exemple illustratif donné dans le tableau, TABLEAU 1 ci-après, la série d'instructions précitée comporte dix instructions, chaque instruction étant représentée par un octet et illustrée par un chiffre de 1 à 7, les séquences d'instructions successives examinées comprennent 2, 3, 4 puis 5 octets.

Les séquences d'instructions successives Si, dont le nombre d'occurrences dans le programme de type code objet intermédiaire précité est supérieur ou égal à deux, sont données dans le tableau ci-après.

**TABLEAU 1**

| | | | |
|---|---|---|---|
| 4 octets | [7-3-5-7]:2 | | |
| 3 octets | [7-3-5]:2 | [3-5-7]:2 | |
| 2 octets | [7-3]:3 | [3-5]:2 | [5-7]:2 |

En deuxième lieu, le système compacteur remplace certaines séquences Sᵢ du TABLEAU 1 par un code d'instructions spécifiques.

Le code d'instructions spécifiques Cᵢ est déterminé chronologiquement à partir du premier code correspondant à une instruction standard. Dans un code intermédiaire objet courant, il existe à ce jour 106 instructions standard et les codes de ces instructions sont compris entre 000 et 105. Le premier code d'instructions spécifiques Cᵢ peut alors être la valeur 106, le second la valeur 107 et ainsi de suite. Chaque fois que les séquences d'instructions identiques Sᵢ sont remplacées par un nouveau code d'instructions spécifiques Cᵢ, une fois qu'une telle opération est terminée, la liste représentée dans le tableau précédent est alors recalculée.

A titre d'exemple non limitatif et dans le cas du remplacement de la séquence d'instructions de 4 octets représentée au tableau précédent, la séquence 7-3-5-7, et allocation d'un code spécifique correspondant 106, le programme de type code objet intermédiaire compacté devient :
1-106-3-106.

Dans ces conditions, il n'existe plus de séquence d'instructions standard Iₛ et d'instructions spécifiques IS se retrouvant à l'identique au moins deux fois. Bien entendu, le fichier constitutif du programme de type code objet intermédiaire compressé FCC et le fichier d'exécution ou de décompactage de ce dernier sont mémorisés au niveau du système compacteur précité.

Après l'opération de compactage réalisée par le système compacteur, on dispose du programme de type code objet intermédiaire proprement dit, exécutable par le système cible, et du fichier d'exécution FEX précité. Le premier précité contient des instructions standard Iₛ et des instructions spécifiques IS, alors que le second comporte au moins un tableau permettant de lier les codes spécifiques Cₗ avec les séries d'instructions standard Sₗ remplacées par les codes spécifiques précités. Bien entendu, ces deux fichiers peuvent être regroupés en un seul et même fichier en vue du transfert de ce dernier au système cible destinataire, c'est-à-dire à la carte à microprocesseur destinée à recevoir ce dernier.

En ce qui concerne le fichier d'exécution FEX, on indique que celui-ci comporte au moins un fichier, noté MEM-SEQ, constitué par une succession de plusieurs champs tels qu'un champ de code spécifique Ci, un champ de séquence Si, tel que mentionné précédemment.

Suite à l'opération précitée, le fichier unique ou, le cas échéant, les deux fichiers précités, sont transmis au système cible et directement traités par un programme de chargement. Ce programme de chargement est principalement chargé d'écrire en mémoire programmable 18a ou en mémoire morte 18b les données reçues en vue d'une bonne exécution par la suite.

A titre d'exemple non limitatif, on indique que le fichier relatif au programme de type code objet intermédiaire compacté FCC est stocké sans traitement à partir d'une adresse déterminée, notée ADR-MEM-PGM, dans la mémoire programmable 18a précitée.

En ce qui concerne le fichier d'exécution FEX, on indique que vis-à-vis de ce dernier, le programme de chargement analyse les données de ce fichier et créé dynamiquement un tableau, noté TAB-PRO, permettant d'associer les codes d'instructions spécifiques Ci avec les séries d'instructions. En fait, le tableau TAB-PRO permet d'assurer une correspondance biunivoque entre les codes d'instructions spécifiques précités Cₗ et une adresse d'implantation permettant l'exécution des instructions correspondantes.

Une implantation, d'une part, du fichier support du programme de type code objet intermédiaire compacté FCC, du fichier d'exécution FEX et du fichier TAB-PRO précédemment cité, ce dernier fichier ayant été engendré par le programme de chargement dans la mémoire programmable 18a de la carte à microprocesseur, est représentée en figure 2c.

Sur cette figure, alors que le tableau des codes d'instructions standard Iₛ est mémorisé au niveau de l'interpréteur en un tableau TAB-STD, le fichier d'exécution FEX et le fichier TAB-PRO permettant d'assurer la correspondance des sauts d'adresse avec les codes d'instructions spécifiques Cᵢ, ces deux tableaux permettant l'exécution effective au niveau du microprocesseur de l'unité cible du programme de type code objet intermédiaire compacté FCC, sont au contraire mémorisés dans la mémoire programmable 18a. On dispose ainsi d'un ensemble exécutable par l'intermédiaire de l'interpréteur dans les conditions qui seront décrites ci-après.

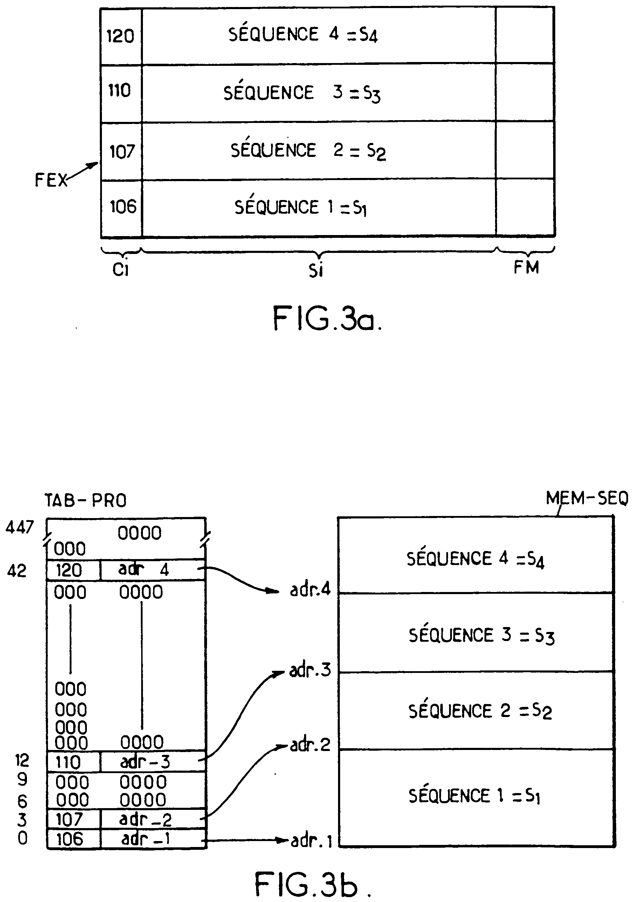

Préalablement à la description de l'exécution d'un programme de type code objet intermédiaire compacté FCC, une description détaillée de la structure des fichiers d'exécution FEX et du fichier TAB-PRO et de la relation fonctionnelle entre ces derniers sera maintenant donnée en liaison avec les figures 3a et 3b.

Sur la figure 3a, on a représenté le fichier d'exécution FEX de manière détaillée, celui-ci comportant ainsi que mentionné précédemment, outre les champs de codes spécifiques Ci et de séquences d'instructions Sᵢ, un champ de fin de macro-instructions, noté FM, indiquant en fait la fin de la séquence précitée. Dans un mode de réalisation non limitatif, chaque code spécifique Ci peut être inscrit au début du champ, sur un octet par exemple, puis chaque séquence correspondante Si est inscrite dans un second champ de longueur variable. Le code de fin de macro FM est de type standard et correspond à celui utilisé par le langage classique précédemment indiqué dans la description.

Lors de la réception du fichier d'exécution FEX dont la structure de données correspond à celle représentée en figure 3a par exemple, les différents champs Cᵢ, Si et FM sont traités séparément.

En premier lieu, le code spécifique Cᵢ de l'instruction spécifique IS correspondante est écrit dans le fichier TAB-PRO et la séquence d'instructions Si associée à ce code spécifique constitutive de l'instruction spécifique précitée est écrite dans un fichier ou mémoire référencée MEM-SEQ à partir d'une adresse notée ADR-1. Le code Cᵢ de l'instruction spécifique correspondante est écrit à l'adresse TAB-PRO + 3 x (CODE-106). Dans cette relation, on indique que l'adresse TAB-PRO est l'adresse d'ouverture du fichier TAB-PRO, alors que la valeur CODE représente la valeur numérique du code Ci correspondant. Sur la figure 3b, on a représenté le mode opératoire correspondant pour une valeur d'adresse TAB-PRO égale arbitrairement à 0, le premier code spécifique alloué ayant la valeur 106 et les autres codes spécifiques alloués successifs ayant des valeurs 107 et suivantes. On indique que sur la figure 3b seuls quatre codes spécifiques 106, 107, 110 et 120 ont été représentés pour une meilleure compréhension, les autres espaces mémoire étant remplis par des valeurs arbitraires.

Dans ces conditions, Adr-i est la première adresse disponible dans la mémoire MEM-SEQ, cette adresse correspondant à l'adresse Adr-1 pour la première séquence d'instructions Sᵢ = Sₗ. A partir de cette première adresse, laquelle constitue l'adresse d'ouverture du fichier dans la mémoire MEM-SEQ, les séquences d'instructions Sᵢ sont ainsi écrites de façon séquentielle dans l'ordre de leur chargement. Le code FM de fin de macro est également écrit à la fin de la série correspondante.

A la suite de l'écriture précitée dans la mémoire MEM-SEQ et après une étape de vérification correcte d'écriture, le programme de chargement écrit dans le tableau TAB-PRO à la suite de chaque code spécifique Cᵢ la valeur de l'adresse d'écriture de la séquence dans la mémoire MEM-SEQ. Le programme de chargement recalcule alors une nouvelle adresse d'écriture pour la prochaine séquence Si de rang i incrémenté ou décrémenté en fonction du mode de parcours des séquences d'instructions Si précitées.

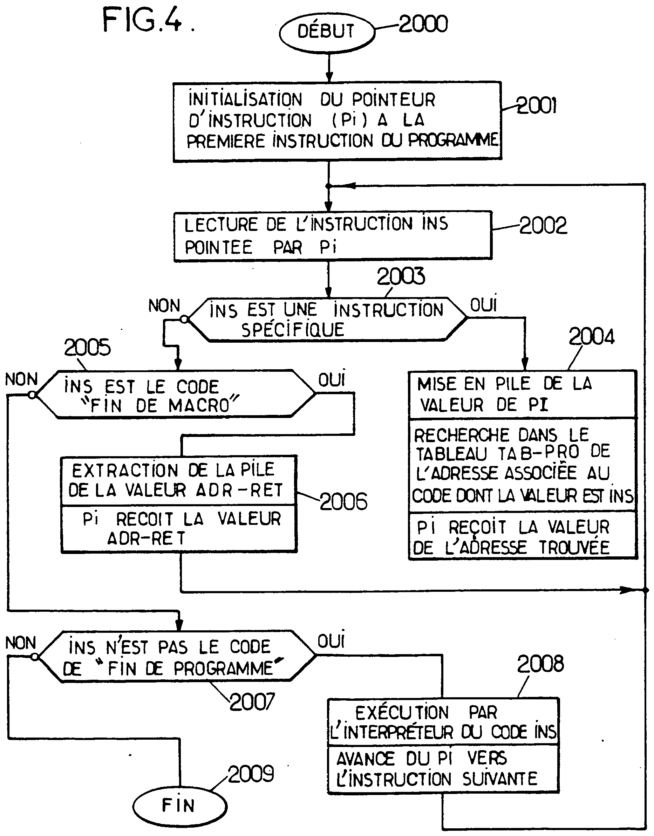

Un processus d'exécution d'un programme de type code objet intermédiaire compacté supporté par un fichier FCC précédemment décrit et contenant des instructions spécifiques sera maintenant décrit en référence à la figure 4.

L'exécution d'un tel programme s'effectue par l'intermédiaire de l'interpréteur à l'aide d'un pointeur d'instruction, noté PI. En fait, le pointeur d'instruction PI lit le code de l'instruction à exécuter, instruction standard Is ou instruction spécifique IS, et présente ce code à l'interpréteur qui déclenche ensuite les actions correspondant à ce dernier.

Au début de l'exécution d'un programme, le pointeur d'instruction PI est chargé avec l'adresse de début de ce programme, c'est-à-dire l'adresse ADR-MEM-PGM.

L'interpréteur analyse la valeur du code lu par le pointeur d'instruction PI. Dans le cadre de cette analyse, ce dernier détermine si cette valeur de code correspond à un code de type standard Cs ou au contraire à un code de type spécifique Cᵢ. Cette opération est réalisée à partir du tableau TAB-STB mémorisé au niveau de l'interpréteur et associant les codes d'instructions standard, et donc les instructions standard Is, avec les adresses d'exécution dans son programme.

Si la valeur du code lu n'est pas dans ce dernier tableau, l'interpréteur provoque un appel en lecture dans le tableau TAB-PRO afin de vérifier l'existence de la valeur du code lu dans ce dernier tableau. Si le code lu n'est pas non plus dans ce dernier tableau, l'interpréteur est incapable d'exécuter l'instruction lue et l'exécution du programme s'arrête en indiquant un message d'erreur, non décrit dans l'organigramme de la figure 4.

Sur la figure 4 précitée, on a représenté par 2000 le début de l'opération d'exécution, 2001 l'opération d'initialisation du pointeur d'instruction PI à la première instruction du programme et 2002 une opération de lecture de l'instruction pointée par le pointeur d'instruction PI. Cette opération correspond en fait à la lecture de la valeur de code précitée.

De la même manière, à l'étape 2003 de la figure 4, l'appartenance ou la non-appartenance de la valeur de code lu au tableau des codes standard TAB-STB et l'appartenance de cette valeur de code lu au tableau TAB-PRO permet en fait de constituer le test 2003 précité, l'instruction lue INS étant ainsi discriminée en qualité d'instruction standard Is ou instruction spécifique IS. La situation d'absence d'appartenance du code lu et de l'instruction lue correspondante à l'un et l'autre des deux tableaux génératrice d'un message d'erreur n'est pas représentée en figure 4, afin de ne pas surcharger le dessin.

Si, sur réponse positive au test 2003 précité, le code lu correspond à une instruction spécifique, la valeur du pointeur d'instruction PI, pour lire l'instruction suivante, est calculée et mémorisée dans la pile. L'interpréteur lit dans le tableau TAB-PRO la valeur de l'adresse de la séquence d'instructions Si associée au code spécifique Ci lu et initialise la valeur du pointeur d'instruction PI avec cette valeur. L'ensemble de ces opérations porte la référence 2004 sur la figure 4 précitée. A la suite de l'étape 2004 précitée, l'interpréteur boucle de nouveau à l'étape lecture du code, ainsi que représenté en figure 4, par retour à l'étape 2002.

Si, sur réponse négative au test 2003, le code lu correspond à une instruction de type standard Is, l'interpréteur contrôle dans une étape de test 2005 si la valeur de ce code correspond à une valeur de fin de macro représentant en fait une fin de séquence. Si tel est le cas, la valeur précédemment mémorisée dans la mémoire de pile est extraite et la pile est mise à jour, cette valeur étant chargée dans le pointeur d'instruction PI. L'opération d'extraction de la pile de la valeur précédemment mémorisée constituant une adresse de retour puis de remise à jour de la pile, est représentée en 2006, l'adresse de retour étant notée ADR-RET. Suite à l'étape 2006 précitée, l'interpréteur boucle de nouveau le processus à l'étape de lecture de la valeur de code, c'est-à-dire à l'étape 2002. Si, sur réponse négative au test 2005, la valeur du code lu correspondant à une instruction de type standard ne correspond toutefois pas à une fin de macro ou fin de série, alors, le code est exécuté de façon connue en tant que telle par l'interpréteur. Ainsi qu'on l'a toutefois représenté en figure 4, une étape de test 2007 est prévue dans ce cas préalablement à l'exécution proprement dite de l'instruction standard précitée. Le test 2007 consiste à vérifier que la valeur du code et l'instruction INS correspondante ne correspond pas à celle d'une fin de programme. Sur réponse positive au test 2007 précité, l'étape d'exécution 2008 de cette instruction par l'interpréteur est alors réalisée, à cette étape d'exécution étant associée une étape d'incrémentation du pointeur d'instruction vers l'instruction suivante. Suite à l'étape 2008 précitée, l'interpréteur reboucle vers l'étape de lecture de la valeur de code pointée par le pointeur d'instruction PI, c'est-à-dire l'étape de lecture 2002.

Sur réponse négative au test 2007, l'instruction correspondant à une instruction de fin de programme, une étape de fin 2009 est réalisée. L'interpréteur dans ce cas arrête son action et donne la main au système d'exploitation OS. Celui-ci attend alors une nouvelle instruction de commande.

Le mode de réalisation et de mise en oeuvre du processus d'exécution d'un programme de type code objet intermédiaire compacté, tel que décrit précédemment en liaison avec la figure 4, n'est pas limitatif.

En premier lieu, on indique que la mémoire de pile peut être subdivisée en deux mémoires de pile séparées, une mémoire de pile pour les instructions standard Is, et une mémoire de pile pour les instructions spécifiques IS encore désignées par macro-instructions. Dans un tel mode de réalisation, on connaît le nombre maximal d'imbrications d'instructions spécifiques IS intraprocéduralement. Pour avoir la taille totale occupée par cette pile, il suffit de multiplier par le nombre maximal de procédures imbriquées. La mise en oeuvre d'une mémoire de pile séparée pour les instructions spécifiques IS procure, par rapport à l'utilisation d'une seule pile, une réduction de la consommation totale de mémoire.

En outre, afin d'augmenter le nombre d'instructions spécifiques IS utilisables en lieu et place du nombre d'instructions spécifiques limité entre 106 et 255 dans l'exemple précédemment donné dans la description, les codes spécifiques Ci peuvent avantageusement être codés sur deux octets. Dans ces conditions, une valeur de code particulière, telle que la valeur 255, peut alors indiquer le codage sur deux octets.

Enfin, le système cible, lorsque ce dernier est constitué par un système embarqué multi-applications, comprend plusieurs programmes compilés et compactés, c'est-à-dire plusieurs fichiers FCC précédemment décrits dans la description. Ces programmes doivent fonctionner de manière indépendante. Dans un tel cas, l'interpréteur étant unique, il exécute tous les programmes d'applications chargés par le programme de chargement. Si deux programmes d'applications utilisent des instructions spécifiques, dans le mode de réalisation précédemment décrit dans la description, il est possible que le système compacteur affecte le même code spécifique Ci pour deux séries d'instructions différentes.

Afin de remédier à une telle situation et pour permettre à l'interpréteur de distinguer les deux codes, les champs du fichier d'exécution FEX tels que représentés précédemment en figure 3a peuvent être complétés par un troisième paramètre relatif à un numéro d'identification de l'application considérée. Ce numéro d'identification est alors mémorisé également pour chaque code spécifique affecté dans le tableau TAB-PRO. Ce dernier paramètre constitue en fait la référence du programme chargé en même temps que le fichier contenant le tableau permettant d'associer chaque code d'instruction spécifique Ci avec des séquences d'instructions Si remplacées par ces derniers pour l'application considérée. Lors de l'exécution de l'application du programme par l'interpréteur, ce dernier peut ainsi assurer la discrimination des instructions spécifiques relatives à cette application.

Bien entendu, le processus précédemment décrit permettant la mise en oeuvre d'un système embarqué multi-applications présente l'inconvénient d'une consommation accrue de mémoire, du fait de l'attribution d'un champ supplémentaire relatif au numéro d'application considérée.

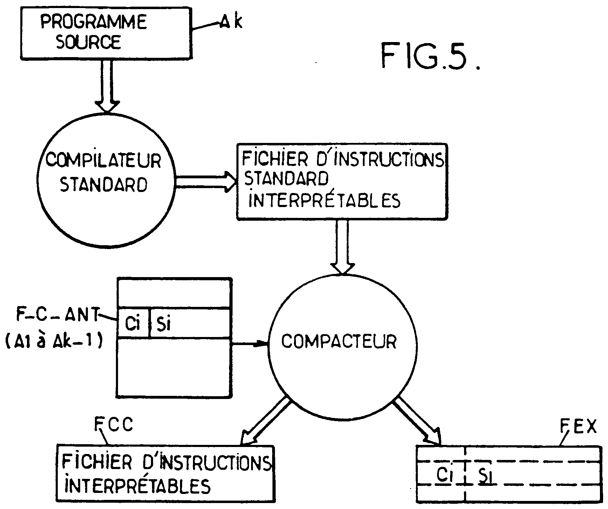

Un processus plus avantageux sera maintenant décrit en liaison avec la figure 5.

Relativement à la figure 5, on considère un système embarqué tel qu'une carte à microprocesseur comportant plusieurs applications, notées Aₗ à Aₖ, les valeurs Aₗ à Aₖ constituant en fait des numéros d'identification de chaque application. Dans ce but, lors du compactage, conformément au procédé objet de la présente invention tel que décrit précédemment dans la description, de tout programme ou application source de numéro d'identification donné à Aₗ à Aₖ₋₁ par exemple, le système cible, c'est-à-dire carte à microprocesseur, transmet au compacteur le contenu de la mémoire MEM-SEQ avec bien entendu les codes spécifiques Ci correspondants. En fait, le système cible recalcule à partir du fichier ou tableau TAB-PRO et du contenu de la mémoire MEM-SEQ un fichier des coefficients spécifiques antérieurs, noté F-C-ANT, relatif aux applications Aₗ à Aₖ₋₁. Le fichier F-C-ANT assure la mise en correspondance biunivoque de chaque code spécifique Ci et de la séquence Si associée à ce dernier pour l'ensemble des applications Aₗ à Aₖ₋₁. Dans ces conditions et dans un mode de réalisation non limitatif simplifié, le fichier F-C-ANT peut consister en un fichier de même format que le fichier FEX précité. Dans le processus de compactage préférentiel tel que représenté en figure 5, le fichier F-C-ANT des codes spécifiques antérieurs est alors communiqué au compacteur afin d'assurer un apprentissage de ce dernier.

Lors du compactage d'une nouvelle application, de numéro d'identification Aₖ, le compacteur recherche toutes les occurrences des séquences d'instructions Sᵢ déjà enregistrées dans le fichier F-C-ANT, c'est-à-dire en fait dans le tableau TAB-PRO du système cible pour les applications antérieures Aₗ à Aₖ₋₁. A chaque occurrence trouvée, le système compacteur remplace la séquence d'instructions correspondante Si par le code spécifique Ci de l'instruction spécifique IS correspondante. Cette opération étant effectuée, le système compacteur peut alors analyser l'application de code d'identification Aₖ et bien entendu rechercher d'autres occurrences en vue de créer des instructions spécifiques supplémentaires qui n'ont pas encore été mémorisées. Une mise à jour du fichier F-C-ANT peut alors être effectuée. Le processus de décompactage décrit en liaison avec la figure 5 peut être mis en oeuvre de manière particulièrement avantageuse pour assurer le compactage, soit de programmes chargés pour la première fois dans le système embarqué, soit de programmes chargés en supplément à d'autres programmes compactés existants dans le système embarqué.

Dans les deux hypothèses précitées, le procédé de compactage, objet de l'invention, consiste à mémoriser la table d'exécution relative à au moins un programme intermédiaire de type code objet compacté, le premier de ces programmes dans la première hypothèse et un ou plusieurs programmes compactés existants dans la deuxième hypothèse, puis pour tout programme intermédiaire supplémentaire, à lire la table d'exécution mémorisée et à effectuer le compactage de tout programme supplémentaire, en tenant compte des instructions et codes spécifiques mémorisés dans la table d'exécution, ainsi que décrit précédemment dans la description. Bien entendu, le programme de type code objet intermédiaire compacté ainsi créé ne peut alors être exécuté que sur le système cible qui a fourni précédemment au système compacteur le fichier F-C-ANT pertinent correspondant.

Dans le cadre de la mise en oeuvre du procédé de compactage d'un programme de type code objet intermédiaire, tout système embarqué, tel qu'un objet portatif multi-applications formé par exemple par une carte à microprocesseur et comportant des ressources de calcul tel qu'un microprocesseur, une mémoire programmable, une mémoire morte et un interpréteur de langage, comprend, en référence avec la figure 2c précédemment introduite dans la description, au moins, outre le tableau TAB-STD des codes standard constitutifs d'un programme de type code objet intermédiaire mémorisé au niveau de l'interpréteur, un ensemble de fichiers mémorisés dans la mémoire programmable 18a par exemple.

Ainsi, l'objet portatif correspondant comprend au moins un programme de type code objet intermédiaire compacté, c'est-à-dire le fichier FCC représenté en figure 2c. Ce fichier peut être constitutif d'une application telle que mentionnée précédemment, soit d'une fonction telle qu'une fonction de chiffrement/déchiffrement de données ou analogue. Ce fichier de type code objet intermédiaire compacté consiste bien entendu en une suite de codes d'instructions spécifiques Cᵢ et de codes d'instructions standard correspondant aux codes d'instructions du programme de type code objet intermédiaire précité. Les codes d'instructions spécifiques Ci correspondent à des séquences d'instructions standard successives Sᵢ précédemment mentionnées dans la description.

En outre, ainsi que représenté sur la figure 2c précitée, une table d'exécution permet la mise en correspondance biunivoque entre chaque code opératoire spécifique Cᵢ et la séquence d'instructions standard successives Si associée à ce dernier. L'ensemble de ces fichiers permet d'optimiser l'espace mémoire occupé dans la mémoire, notamment la mémoire programmable 18a, de l'objet portatif.

Ainsi que représenté d'ailleurs en figure 2c, la table d'exécution comprend au moins un fichier des séquences successives correspondant aux instructions spécifiques, fichier désigné par la mémoire MEM-SEQ, et un tableau, désigné par TAB-PRO des codes d'instructions spécifiques et des adresses d'implantation de ces instructions spécifiques dans le fichier des séquences successives.

L'exécution du programme de type code objet intermédiaire compacté est alors réalisée, ainsi que représenté en figure 4.

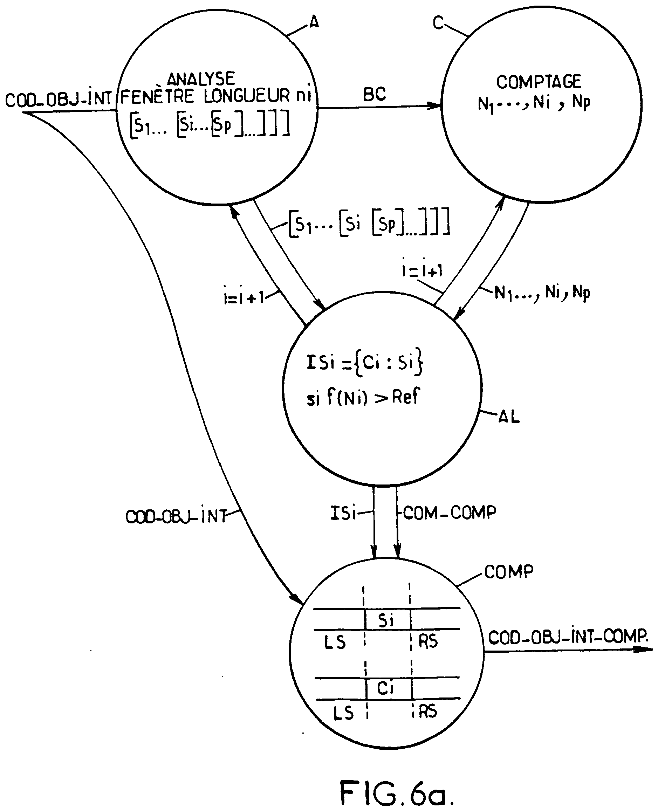

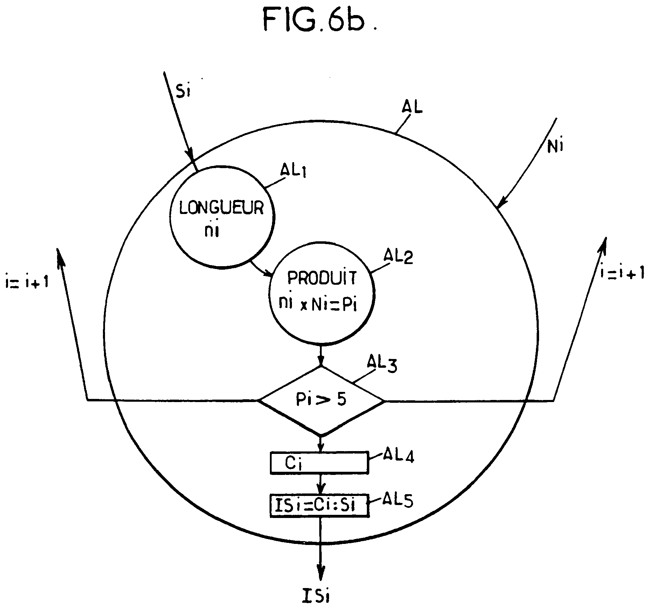

Un système de compactage d'un programme de type code objet intermédiaire permettant la mise en oeuvre du procédé de compactage précédemment décrit dans la description sera maintenant donné en liaison avec les figures 6a et 6b.

D'une manière générale, le système de compactage, objet de la présente invention, sera décrit comme une combinaison de modules, ces modules pouvant être mis en oeuvre, soit de manière matérielle, soit, préférentiellement, de manière logicielle, les flux de données entre ces modules étant représentés.

Ainsi, sur la figure 6a, on a représenté le système de compactage, objet de la présente invention, lequel est réputé comprendre au moins un module A d'analyse de toutes les instructions directement exécutables, constitutives du programme de type code objet intermédiaire, noté COD-OBJ-INT. D'une manière générale, le fichier informatique support du programme de type code objet intermédiaire précité est considéré comme une chaîne d'octets, ou chaîne de caractères, et le mode opératoire du système de compactage, objet de la présente invention, sera donné dans une optique de traitement de chaîne correspondant.

A partir de la chaîne d'octets précitée, le module d'analyse A permet, par lecture du programme de type code objet COD-OBJ-INT, de discriminer et établir une liste de toutes les séquences d'instructions standard Si contenues dans le programme précité. Sur la figure 6a, les séquences d'instructions standard Sₗ, Sᵢ₋₁, Sᵢ, Sᵢ₊₁, ... Sₚ, sont ainsi notées sous forme symbolique d'une liste selon la notation symbolique des listes. On comprend ainsi que le module d'analyse A peut consister en une fenêtre glissante correspondant à un nombre nᵢ d'octets, cette fenêtre glissante permettant d'assurer l'analyse des séquences Si ainsi que précédemment mentionnées en référence avec le tableau 1 de la description. La fenêtre glissante assure en fait une discrimination de chaque séquence Si par défilement relatif de la chaîne d'octets vis-à-vis de la fenêtre précitée. A chaque occurrence de la séquence Sₗ considérée, un bit de comptage BC est délivré par le module d'analyse A.

Ainsi que représenté en outre en figure 6a, le système de compactage, objet de la présente invention, comprend un module C de comptage du nombre d'occurrences dans le programme de type code objet précité de chacune des séquences d'instructions directement exécutables Sᵢ précédemment mentionnées. Le module de comptage C peut être réalisé par un module logiciel, lequel compte le nombre de bits successifs à la valeur 1 du bit de comptage BC précité. Le module de comptage C permet de mémoriser les nombres d'occurrences Nₗ ... Nᵢ₋₁, Nᵢ, Nᵢ₊₁ ... Np de chaque séquence Sₗ ... Sᵢ₋₁ à Sᵢ₊₁ ... Sₚ correspondante et suivante. Cette mémorisation peut être effectuée sous forme d'une liste.

En outre, ainsi que représenté sur la figure 6a, un module AL d'allocation à au moins une séquence d'instructions directement exécutables Sᵢ d'un code spécifique Ci associé à cette séquence Sᵢ est prévu pour engendrer une instruction spécifique, notée ISₗ sur la figure 6a, sur critère de supériorité de la fonction d'au moins le nombre Nₗ d'occurrences correspondant vis-à-vis d'une valeur de référence ainsi que mentionné précédemment dans la description.

Dans le cas où la fonction d'au moins le nombre Nᵢ est supérieure à la valeur de la fonction de la valeur de référence précitée, le module AL délivre une commande de compactage COM-COMP, lequel peut consister en un bit à la valeur 1 ou 0 correspondante.

Enfin, le système de compactage, objet de la présente invention, comprend un module de compactage proprement dit COMP, lequel reçoit, d'une part, le fichier relatif au programme de type code objet intermédiaire précité COD-OBJ-INT et la commande de comptage COM-COMP. Le module de compactage proprement dit COM? permet en fait d'assurer le remplacement dans le programme de type code objet précité, considéré comme une chaîne d'octets, de chaque occurrence de toute séquence Si correspondant à une instruction spécifique ISᵢ par le code spécifique Ci associé à cette séquence d'instructions.

En ce qui concerne le mode opératoire du module de compactage COMP proprement dit, on indique que celui-ci peut comprendre un sous-module de lecture par fenêtre glissante analogue à celui du module d'analyse, permettant de localiser la séquence d'instructions standard Si dans la chaîne d'octets précitée. En pratique, sur localisation de la séquence d'instructions standard Si précitée, ainsi que représenté de manière illustrative en figure 6a, le module de compactage peut comprendre un sous-module de partition à gauche et de partition à droite de la séquence Si considérée, pour engendrer une chaîne gauche, notée LS, et une chaîne droite, notée RS. Il peut comporter ensuite, à partir du code spécifique Ci constitutif de l'instruction spécifique ISᵢ, un module de concaténation permettant, d'une part, la concaténation du code spécifique Cₗ correspondant, considéré comme une chaîne d'octets, à la chaîne gauche LS par exemple, puis concaténation de l'ensemble ainsi formé à la chaîne droite RS, ce qui permet d'assurer le remplacement de la séquence Si par le code spécifique Cₗ. Le module de compactage proprement dit COMP délivre ainsi un programme de type code objet intermédiaire compacté, noté sur la figure 6a, COD-OBJ-INT-COMP. Bien entendu, le système de compactage représenté en figure 6a permet l'application du processus de compactage précédemment décrit à l'ensemble de toutes les séquences d'instructions directement exécutables Sᵢ considérées.

En ce qui concerne le module d'allocation AL, dans un mode de réalisation non limitatif, on indique que celui-ci, ainsi que représenté en figure 6b, peut comporter un module de calcul en nombre d'octets de la longueur nᵢ de la séquence d'instructions Si, ce module étant désigné par AL₁ sur la figure 6b. Il peut comporter également un module de calcul, noté AL₂, du produit de cette longueur ni et du nombre d'occurrences Nᵢ de cette séquence Si d'instructions standard. Ce produit, noté Pᵢ, est représentatif du gain de compactage pour la séquence d'instructions directement exécutables Si considérée.

En outre, le module d'allocation AL peut comprendre un module de comparaison, noté AL₃, de ce produit Pᵢ à une valeur de seuil, notée S, déterminée. La valeur du seuil S peut être déterminée expérimentalement. Elle peut également être établie à partir de cette valeur expérimentale pour correspondre, pour un programme de type code objet intermédiaire de longueur donnée, à un pourcentage donné de cette longueur.

Sur réponse négative au test de comparaison effectué par le module AL₃, le rang i de chaque séquence d'instructions directement exécutables Si est incrémenté d'une unité et la nouvelle valeur de i est renvoyée au module d'analyse A, d'une part, et au module de comptage C, d'autre part.

Sur réponse positive au test de comparaison réalisé par le module AL₃, un module AL₄ permet d'établir un code spécifique Cₗ correspondant et, enfin, un module AL₅ permet d'assurer en correspondance biunivoque l'écriture du code spécifique Cᵢ et de la séquence Si considérée d'instructions directement exécutables pour constituer l'instruction spécifique ISᵢ.

En ce qui concerne le module AL₄, on indique que celui-ci peut être réalisé par un module logiciel de comptage permettant, à partir d'une valeur de départ, par exemple la valeur 106 précédemment mentionnée dans la description, d'allouer une valeur correspondante pour la séquence d'instructions Si considérée. Chaque instruction spécifique ISₗ peut alors être écrite sous forme d'une liste correspondante.

Des essais en temps réel de compactage de programmes ou applications contenus dans des cartes à microprocesseur commercialisées par la société BULL CP8 en France ont montré un gain de compactage supérieur à 33%, ce qui permet en fait, lors d'une application du processus de compactage à un nombre égal à trois applications pour un objet portatif mobile, de gagner sensiblement une application supplémentaire pour ce type d'objet.

Un tel gain de compactage a été obtenu dans des conditions sensiblement normales d'utilisation par l'utilisateur, alors que le ralentissement introduit par l'appel de macro-instructions, ce ralentissement étant inhérent à l'appel successif en lecture au niveau du tableau TAB-B-PRO et du fichier MEM-SEQ, n'excède pas sensiblement 10% du temps d'exécution en l'absence de macro-instructions.

## Revendications

1. Procédé de compactage d'un programme intermédiaire consistant en une suite d'instructions standard, le programme intermédiaire étant ensuite utilisé dans un système embarqué, ce système embarqué étant doté d'une mémoire et d'un interpréteur de langage du programme intermédiaire en instructions d'un code objet directement exécutables par un microprocesseur, procédé suivant lequel :
a) on recherche dans le programma intermédiaire des séquences identiques d'instructions standard successives ;
b) on soumet les séquences identiques d'instructions successives à un test de comparaison de supériorité d'une fonction d'au moins le nombre d'occurrences de ces séquences dans ledit programme intermédiaire à une valeur de référence et,
c) sur réponse positive audit test, pour chaque séquence identique d'instructions standard successives satisfaisant à ladite étape de test, on engendre une instruction spécifique par définition d'un code opératoire spécifique et association à ce code opératoire spécifique de ladite séquence d'instructions standard successives ayant satisfait audit test ;
d) on remplace dans ledit programme intermédiaire chaque occurrence de chaque séquence d'instructions successives par ledit code opératoire spécifique qui lui est associé pour obtenir un programme intermédiaire compacté, consistant en une succession d'instructions standard et de codes opératoires spécifiques, et
e) on mémorise dans ladite mémoire une table d'exécution permettant la mise en correspondance biunivoque entre chaque code opératoire spécifique introduit et la séquence d'instructions successives associée à ce dernier, ce qui permet d'optimiser l'espace mémoire occupé par ledit programme intermédiaire compacté par mémorisation dans ladite mémoire d'une seule occurrence desdites séquences identiques d'instructions successives.

2. Procédé selon la revendication 1, **caractérisé en ce que** ladite fonction est en outre fonction de la taille de chaque séquence identique d'instructions successives.

3. Procédé selon la revendication 1, **caractérisé en ce que** pour la mise en oeuvre d'un compactage d'une pluralité de programmes intermédiaires, ledit procédé consiste en outre ;
- à mémoriser la table d'exécution relative à au moins un programme intermédiaire compacté, et pour tout programme intermédiaire supplémentaire soumis à un processus de compactage ;
- à lire ladite table d'exécution mémorisée, et
- à effectuer le compactage de tout programme supplémentaire, compte tenu des instructions et codes spécifiques mémorisés dans cette table d'exécution.

4. Procédé d'exécution d'un programme intermédiaire compacté obtenu par la mise en oeuvre du procédé de compactage selon la revendication 1, et consistant en une succession d'instructions standard et de codes opératoires spécifiques mémorisés dans la mémoire d'un système embarqué, **caractérisé en ce qu'**il consiste :
- à reconnaître dans ladite mémoire l'existence d'une table d'exécution mémorisée comportant au moins une séquence d'instructions successives associée à un code opératoire spécifique en correspondance biunivoque ;
- à appeler, par l'intermédiaire de l'interpréteur, une commande de lecture des instructions standard ou codes opératoires spécifiques successifs du programme intermédiaire compacté et, en présence d'un code opératoire spécifique :
□ appeler par instruction de lecture dans la mémoire ladite séquence d'instructions successives associée audit code opératoire spécifique et, en présence d'une instruction standard,
□ appeler par instruction de lecture l'exécution de cette instruction.

5. Procédé selon la revendication 4, **caractérisé en ce que** lorsqu'une séquence d'instructions successives associée à un code opératoire spécifique est appelée, la valeur courante d'un compteur de programme est incrémentée dans une pile associée aux codes opératoires spécifiques, et un pointeur de programme pointe vers la première instruction de ladite séquence d'instructions spécifique, puis, sur exécution d'une instruction de fin de séquence d'instructions spécifiques, ledit compteur de programme est décrémenté, et l'exécution se poursuit à partir de l'instruction ou du code opératoire spécifique suivant.

6. Procédé selon la revendication 5, **caractérisé en ce que** la pile associée aux codes opératoires spécifiques et la pile associée aux instructions standard sont' constituées par une pile unique.

7. Système embarqué multi-applications comprenant des ressources de calcul, une mémoire et un interpréteur de langage d'un programme intermédiaire en instructions directement exécutables par ces ressources de calcul, **caractérisé en ce que** ledit système embarqué multi-applications comporte au moins, outre un tableau des codes standard constitutifs dudit programme intermédiaire mémorisé au niveau dudit interpréteur :
- au moins un programme intermédiaire compacté selon le procédé de la revendication 1, constitutif d'une application et consistant en une suite de codes d'instructions spécifiques et de codes d'instructions standard, lesdits codes d'instructions spécifiques 5 correspondant à des séquences d'instructions standard successives ;
- une table d'exécution permettant la mise en correspondance biunivoque entre code opératoire spécifique et la séquence d'instructions standard successives associée ) à ce dernier, ledit au moins un programme intermédiaire compacté et ladite table d'exécution étant mémorisés dans ladite mémoire, ce qui permet d'optimiser l'espace mémoire occupé par ledit programme intermédiaire compacté par mémorisation dans ladite mémoire programmable d'une seule occurrence desdites séquences identiques d'instructions successives.

8. Système embarqué selon la revendication 7, **caractérisé en ce que** ladite table d'exécution comprend au moins :
- un fichier des séquences successives correspondant aux instructions spécifiques ;
- un tableau des codes d'instructions spécifiques et des adresses d'implantation de ces instructions spécifiques dans la table des séquences successives.

9. Système embarqué selon la revendication 8, **caractérisé en ce que** ledit fichier des séquences successives correspondant aux instructions spécifiques et ledit tableau des codes d'instructions spécifiques sont mémorisés en mémoire programmable dudit système embarqué.

10. Unité de compactage d'un programme intermédiaire, ce programme intermédiaire consistant en une série d'instructions standard exécutables par un système embarqué, ladite unité comprenant des moyens spécifiques pour exécuter chacune des étapes de la revendication 1 parmi lesquels sont compris au moins :
- des moyens d'analyse de toutes les instructions standard exécutables permettant par lecture dudit programme intermédiaire de discriminer et établir une liste de toutes les séquences d'instructions standard exécutables contenues dans ce programme intermédiaire ;
- des moyens de comptage du nombre d'occurrences, dans ce programme intermédiaire, de chacune des séquences d'instructions standard exécutables membre de cette liste ;
- des moyens d'allocation à au moins une séquence d'instructions standard exécutables d'un code spécifique associé à cette séquence d'instructions standard exécutables pour engendrer une instruction spécifique ;
- des moyens de remplacement dans le programme de chaque occurrence de cette séquence d'instructions standard exécutables par le code spécifique associé à cette séquence d'instructions standard exécutables, représentatif de ladite instruction spécifique, ce qui permet d'engendrer un programme compacté, comprenant une succession d'instructions standard exécutables et d'instructions spécifiques.

11. Unité selon la revendication 10, **caractérisé en ce que** lesdits moyens d'allocation à au moins une séquence d'instructions standard exécutables d'un code spécifique associé à cette séquence d'instructions standard exécutables pour engendrer une instruction spécifique comportent au moins :
- des moyens de calcul de la valeur d'une fonction d'au moins la longueur et du nombre d'occurrences de cette séquence d'instructions standard exécutables, ladite fonction étant représentative du gain de compactage pour cette séquence d'instructions standard exécutables ;
- des moyens de comparaison de la valeur de cette fonction à une valeur de seuil, et, sur réponse positive à ladite comparaison,
- des moyens d'écriture dans un fichier en correspondance biunivoque d'un code spécifique et de cette séquence d'instructions standard exécutables pour constituer ladite instruction spécifique.

## Patentansprüche

1. Verfahren zur Kompression eines Zwischenprogramms bestehend aus einer Reihe von Standardanweisungen, wobei das Zwischenprogramm anschließend in einem eingebetteten System eingesetzt wird, dieses System mit einem Speicher und einem Interpreter ausgestattet ist, der die Programmiersprache des Zwischenprogramms in direkt von einem Mikroprozessor ausführbare Anweisungen übersetzt, Verfahren, wonach:
a) im Zwischenprogramm nach identischen Sequenzen von aufeinanderfolgenden Standardanweisungen gesucht wird;
b) die identischen Sequenzen von aufeinanderfolgenden Standardanweisungen einem Vergleichstest unterzogen werden, der sich darauf bezieht, dass eine Funktion zumindest in der Häufigkeit des Auftretens dieser Sequenzen in dem Zwischenprogramm in Bezug auf einen Referenzwert größer ist, und
c) bei positiver Antwort auf den Test für jede identische Sequenz von aufeinanderfolgenden Standardanweisungen, welche diesen Testschritt erfüllt, eine spezifische Anweisung erzeugt wird, indem ein spezifischer Operationscode definiert und diesem spezifischen Operationscode die Sequenz von aufeinanderfolgenden Standardanweisungen, welche den Testschritt erfüllt, zugeordnet wird;
d) in dem Zwischenprogramm jedes Auftreten einer jeden Sequenz von aufeinanderfolgenden Anweisungen durch den ihr zugeordneten spezifischen Operationscode ersetzt wird, um ein komprimiertes Zwischenprogramm zu erhalten, das aus einer Folge von Standardanweisungen und spezifischen Operationscodes besteht, und
e) in dem Speicher eine Ausführungstabelle gespeichert wird, die es ermöglicht, zwischen jedem eingeführten spezifischen Operationscode und der diesem Operationscode zugeordneten Sequenz von aufeinanderfolgenden Anweisungen eine Eins-zu-eins-Korrespondenz herzustellen,
wodurch der Speicherplatz optimiert werden kann, der von dem komprimierten Zwischenprogramm belegt wird, indem in dem Speicher die identischen Sequenzen von aufeinanderfolgenden Anweisungen nur einmal gespeichert werden.

2. Verfahren nach Anspruch 1, **dadurch gekennzeichnet, dass** die Funktion zudem eine Funktion der Größe jeder identischen Sequenz von aufeinanderfolgenden Anweisungen ist.

3. Verfahren nach Anspruch 1, **dadurch gekennzeichnet, dass** für die Umsetzung der Kompression einer Vielzahl von Zwischenprogrammen das Verfahren ferner umfasst:
- die Speicherung einer Ausführungstabelle in Bezug auf mindestens ein komprimiertes Zwischenprogramm und für jedes zusätzliche Zwischenprogramm, das einem Kompressionsverfahren unterzogen wird;
- das Auslesen der gespeicherten Ausführungstabelle, und
- die Durchführung der Kompression sämtlicher zusätzlicher Programme unter Berücksichtigung der in dieser Ausführungstabelle gespeicherten Anweisungen und spezifischen Codes.

4. Verfahren zur Ausführung eines komprimierten Zwischenprogramms, das durch die Umsetzung des Kompressionsverfahrens nach Anspruch 1 erhalten wurde, bestehend aus einer Abfolge von Standardanweisungen und spezifischen Operationscodes, die im Speicher eines eingebetteten Systems gespeichert sind, **dadurch gekennzeichnet, dass** es daraus besteht:
- in dem Speicher die Existenz einer gespeicherten Ausführungstabelle zu erkennen, die mindestens eine Sequenz von aufeinanderfolgenden Anweisungen enthält, welche in Eins-zu-eins-Korrespondenz einem spezifischen Operationscode zugeordnet sind;
- durch den Interpreter einen Befehl zum Auslesen der Standardanweisungen oder aufeinanderfolgenden spezifischen Operationscodes des komprimierten Zwischenprogramms aufzurufen und Bei Vorhandensein eines spezifischen Operationscodes:
□ per Lesebefehl im Speicher die Sequenz von aufeinanderfolgenden Anweisungen aufzurufen, die dem spezifischen Operationscode zugeordnet sind und bei Vorhandensein einer Standardanweisung
□ per Lesebefehl die Ausführung dieser Anweisung aufzurufen.

5. Verfahren nach Anspruch 4, **dadurch gekennzeichnet, dass** beim Aufruf einer einem spezifischen Operationscode zugeordneten aufeinanderfolgenden Sequenz von Anweisungen der aktuelle Wert eines Programmzählers in einem *Stapel* inkrementiert wird, der den spezifischen Operationscodes zugeordnet ist, und ein Programmzeiger auf die erste Anweisung der Sequenz von spezifischen Anweisungen zeigt und bei der Ausführung einer Anweisung vom Ende der Sequenz von spezifischen Anweisungen der Programmzähler dekrementiert wird und die Ausführung mit der folgenden spezifischen Anweisung bzw. dem Operationscode fortgesetzt wird.

6. Verfahren nach Anspruch 5, **dadurch gekennzeichnet, dass** der den spezifischen Operationscodes zugeordnete Stapel und der den Standardanweisungen zugeordnete Stapel aus einem einzigen Stapel bestehen.

7. Eingebettetes Multi-Applikationssystem bestehend aus Rechenressourcen, einem Speicher und einem Interpreter zur Übersetzung der Programmiersprache des Zwischenprogramms in direkt von den Rechenressourcen ausführbare Anweisungen, **dadurch gekennzeichnet, dass** das eingebettete Multi-Applikationssystem außer der Tabelle der Standardcodes, aus der das im Interpreter gespeicherte Zwischenprogramm grundlegend besteht, mindestens die folgenden Elemente aufweist:
- mindestens ein Zwischenprogramm, das nach dem Prinzip aus Anspruch 1 komprimiert wurde, das konstitutiv für eine Applikation ist und aus einer Reihe von spezifischen Anweisungscodes und Standardanweisungscodes bestehen, wobei die spezifischen Anweisungscodes Sequenzen von aufeinanderfolgenden Standardanweisungen entsprechen;
- eine Ausführungstabelle, die es ermöglicht, zwischen dem spezifischen Operationscode und der diesem Code zugeordneten Sequenz von aufeinanderfolgenden Anweisungen eine Eins-zu-eins-Korrespondenz herzustellen, wobei mindestens ein komprimiertes Zwischenprogramm und die Ausführungstabelle in dem Speicher gespeichert sind, wodurch der Speicherplatz optimiert werden kann, der von dem komprimierten Zwischenprogramm belegt wird, indem in dem Speicher die identischen Sequenzen von aufeinanderfolgenden Anweisungen nur einmal gespeichert werden.

8. Eingebettetes System nach Anspruch 7, **dadurch gekennzeichnet, dass** die Ausführungstabelle mindestens folgende Elemente umfasst:
- eine Datei der aufeinanderfolgenden Sequenzen, die den spezifischen Anweisungen entsprechen;
- eine Tabelle der spezifischen Anweisungscodes und der Ladeadressen dieser spezifischen Anweisungen in der Tabelle der aufeinanderfolgenden Sequenzen.

9. Eingebettetes System nach Anspruch 8, **dadurch gekennzeichnet, dass** die Datei der aufeinanderfolgenden Sequenzen, die den spezifischen Anweisungen entsprechen, und die Tabelle der spezifischen Anweisungscodes im programmierbaren Speicher des eingebetteten Systems gespeichert sind.

10. Einheit zur Kompression eines Zwischenprogramms, wobei das Zwischenprogramm aus einer Reihe von Standardanweisungen besteht, die durch ein eingebettetes System ausgeführt werden können,
Die Einheit umfasst spezifische Mittel, um jeden der in Anspruch 1 aufgeführten Schritte auszuführen, wobei sie mindestens die folgenden Mittel umfasst:
- Mittel zur Analyse aller ausführbaren Standardanweisungen, die es durch Lesung des Zwischenprogramms ermöglichen, alle in dem Zwischenprogramm enthaltenen Sequenzen von ausführbaren Standardanweisungen zu unterscheiden und eine Liste zu erstellen;
- Mittel zum Zählen der Häufigkeit des Auftretens in diesem Zwischenprogramm jeder auf dieser Liste verzeichneten Sequenz von ausführbaren Standardanweisungen;
- Mittel zur Zuweisung eines spezifischen Codes zu mindestens einer Sequenz von ausführbaren Standardanweisungen, zu der dieser Code zugeordnet ist, um eine spezifische Anweisung zu erzeugen;
- Mittel zum Ersetzen jedes Auftretens dieser Sequenz von ausführbaren Standardanweisungen durch den spezifischen Code, der dieser Sequenz von ausführbaren Standardanweisungen zugeordnet ist, der repräsentativ für die spezifische Anweisung ist, wodurch die Erzeugung eines komprimierten Programms ermöglicht wird, das aus einer Abfolge von ausführbaren Standardanweisungen und spezifischen Anweisungen besteht.

11. Einheit nach Anspruch 10, **dadurch gekennzeichnet, dass** die Mittel der Zuweisung eines spezifischen Codes zu mindestens einer Sequenz von ausführbaren Standardanweisungen, zu der dieser Code zugeordnet ist, um eine spezifische Anweisung zu erzeugen, mindestens umfassen:
- Mittel zur Berechnung des Werts einer Funktion aus mindestens der Länge und der Häufigkeit des Auftretens dieser Sequenz von ausführbaren Standardanweisungen, wobei die Funktion für diese Sequenz von ausführbaren Standardanweisungen repräsentativ für den Kompressionsgewinn ist.
- Mittel zum Vergleich des Werts dieser Funktion mit einem Schwellenwert und bei positiver Antwort auf den Vergleich
- Mittel zum Schreiben eines spezifischen Codes und der Sequenz von ausführbaren Standardanweisungen in eine Datei mit Eins-zu-eins-Korrespondenz, um die spezifische Anweisung zu erzeugen.

## Claims

1. A method for compacting an intermediate program consisting of a series of standard instructions, where the intermediate program is then used in an embedded system, which embedded system has a memory and an interpreter of the language of the intermediate program into instructions of an object code that are directly executable by a microprocessor, in which method:
a) identical sequences of successive standard instructions are searched in the intermediate program;
b) identical sequences of successive instructions are subjected to a comparison test to establish if a function is greater by at least the number of occurrences of the sequences in said intermediate program than a reference value, and,
c) if said test is positive, for each identical sequence of successive standard instructions passing said test step, a specific instruction is generated by defining a specific operating code and associating with that specific operating code said successive sequence of standard instructions that has passed said test;
d) in said intermediate program, each occurrence of each sequence of successive instructions is replaced by said specific operating code associated with it to obtain a compacted intermediate program, consisting in a succession of standard instructions and specific operating codes, and
e) in said memory, an execution table is saved, which allows the establishment of biunivocal correspondence between each specific operating code introduced and the sequence of successive instructions associated with it,
which makes it possible to optimise the space occupied by said compacted intermediate program by saving in said memory only one occurrence of said identical sequences of successive instructions.

2. A method according to claim 1, **characterised in that** said function is further a function of the size of each identical sequence of successive instructions.

3. A method according to claim 1, **characterised in that** for implementing the compacting of a plurality of intermediate programs, said method further consists in;
- saving the execution table relating to least one compacted intermediate program, and for any additional intermediate program subjected to a compacting method;
- reading said saved execution table, and
- compacting 'any additional program', in view of the specific codes and instructions saved **in that** execution table.

4. A method for executing a compacted intermediate program obtained by implementing the compacting method according to claim 1 and consisting in a succession of standard instructions and specific operating codes saved in the memory of an embedded system, **characterised in that** it consists in:
- recognising in said memory the existence of a saved execution table comprising at least one sequence of successive instructions associated with a specific operating code with biunivocal correspondence;
- calling, through the interpreter, a command to read the standard instructions or successive specific operating codes of the compacted intermediate program and,
in the presence of a specific operating code:
□ calling, by a read instruction in the memory, said sequence of successive instructions associated with said specific operating code, and in the presence of a standard instruction,
□ calling, by a read instruction, the execution of the instruction.

5. A method according to claim 4, **characterised in that** when a sequence of successive instructions associated with a specific operating code is called, the current value of a program counter is incremented in a *stack* associated with the specific operating codes, and program pointer points to the first instruction of said specific sequence of instructions, then, upon the execution of an instruction ending a sequence of specific instructions, said program counter is decremented and the execution continues from the next specific operating code or instruction.

6. A method according to claim 5, **characterised in that** the stack associated with specific operating codes and the stack associated with standard instructions are made up of a single stack.

7. An embedded multiple-application system comprising computation resources, a memory and a language interpreter of an intermediate program into instructions that can be executed directly by the computation resources, **characterised in that** said multi-applications embedded system comprises at least, in addition to a table of standard codes making up said intermediate program saved in said interpreter:
- at least one intermediate program compacted according to the principle of claim 1, which makes up an application and consists in a series of specific instruction codes and standard instruction codes, where said specific instruction codes correspond to successive standard instruction sequences;
- an execution table that allows setting up biunivocal correspondence between the specific operating code and the successive standard instructions sequence associated with that code, where at least one compacted intermediate program and said execution table are saved in said memory, which makes it possible to optimise the space occupied by said compacted intermediate program by saving in said programmable memory only one occurrence of said identical sequences of successive instructions.

8. An embedded system according to claim 7, **characterised in that** said execution table comprises at least:
- a file of the successive sequences that correspond to the specific instructions;
- a table of specific instruction codes and addresses of location of those specific instructions in the table of successive sequences.

9. An embedded system according to claim 8, **characterised in that** said file of successive sequences corresponding to the specific instructions and said table of codes of specific instructions are saved in a programmable memory of said embedded system.

10. A unit for compacting an intermediate program, where the intermediate program consists in a series of standard instructions executable by an embedded system,
Where said unit comprises specific means for executing each of the steps of claim 1, comprising at least:
- means to analyse all the standard executable instructions that make it possible, by reading said intermediate program, to discriminate and establish a list of all the standard executable instruction sequences contained in that intermediate program;
- means for counting the number of occurrences in that intermediate program of each of the standard executable instruction sequences that feature in the list;
- means for allocating to at least one standard executable instruction sequence a specific code associated with that standard executable instruction sequence to generate a specific instruction;
- means for replacing in the program each occurrence of that standard executable instruction sequence with the specific code associated with that standard executable instruction sequence, representative of said specific instruction, making it possible to generate a compacted program comprising a succession of standard executable instructions and specific instructions.

11. A unit according to claim 10, **characterised in that** said means for allocating to at least one standard executable instruction sequence a specific code associated with that standard executable instruction sequence to generate a specific instruction comprise at least:
- means for computing the value of a function of at least the length and the number of occurrences of that sequence of standard executable instructions, where said function is representative of the compacting gain for that sequence of standard executable instructions;
- means for comparing the value of that function to a threshold value, and, upon a positive response to said comparison,
- means for writing in a biunivocal correspondence file a specific code and that sequence of standard executable instructions to make up said specific instruction.
